Europäisches Patentamt

European Patent Office

Office européen des brevets

(11) Veröffentlichungsnummer: **0 359 162**
**A2**

## (12) EUROPÄISCHE PATENTANMELDUNG

(21) Anmeldenummer: 89116732.2

(22) Anmeldetag: 09.09.89

(51) Int. Cl.5 **B60S 3/04**

(30) Priorität: 10.09.88 DE 3830910
23.12.88 DE 3843643

(43) Veröffentlichungstag der Anmeldung:
**21.03.90 Patentblatt 90/12**

(84) Benannte Vertragsstaaten:
**DE ES FR GB IT**

(71) Anmelder: **Kleindienst GmbH**
**Argonstrasse 8**
**D-8900 Augsburg(DE)**

(72) Erfinder: **Fritsche, Walter**
**Schnitterstrasse 29**
**D-8901 Königsbrunn(DE)**

(74) Vertreter: **Ernicke, Hans-Dieter, Dipl.-Ing. et al**
**Patentanwälte Dipl.-Ing. H.-D. Ernicke**
**Dipl.-Ing. Klaus Ernicke Schwibbogenplatz**
**2b**
**D-8900 Augsburg(DE)**

(54) **Schleppvorrichtung für Fahrzeugräder in Autowaschanlagen.**

(57) Die Erfindung betrifft eine Schleppvorrichtung (1) für Fahrzeugräder in Autowaschanlagen mit einer Laufbahn (8) für die Räder, einem Zugmittel (3) in Form einer Kette (4) oder eines Seiles und mehreren in Abständen damit verbundenen quer gerichteten Schlepprollen (7). Am Zugmittel (3) sind mehrere Gleitsteine (10) durchgehend oder in Abständen befestigt, die mit dem Zugmittel mitbewegt werden und dabei auf einer Schiene (9) längsbeweglich gelagert und geführt sind. Die Gleitsteine (10) bilden mit der jeweils zugeordneten Schlepprolle (7) einen U- oder H-förmigen Schleppschuh, der das Fahrzeugrad von hinten und zu beiden Seiten umfaßt und führt. Zur besseren seitlichen Führung des Fahrzeugrades können die Gleitsteine (10) an der Innenseite Anschrägungen aufweisen.

Fig.1

## Schleppvorrichtung für Fahrzeugräder in Autowaschanlagen

Die Erfindung betrifft eine Schleppvorrichtung mit den Merkmalen im Oberbegriff des Hauptanspruchs.

Es ist aus der DE-OS 20 17 089, der US-PS 3 058 433 und der US-PS 4 194 449 bekannt, als Zugmittel zwei parallel laufende Ketten einzusetzen, zwischen denen in Abständen eine quergerichtete Schlepprolle angeordnet ist, die das Rad des zu waschenden Fahrzeuges hintergreift und schiebt. Die seitliche Führung des Rades übernehmen ein oder zwei starr angeordnete Schienen. Bei diesen Schleppvorrichtungen kann es zum Ausbrechen des Fahrzeugrades aus der Schleppspur kommen, was regelmäßig Beschädigungen am Fahrzeug und der Waschanlage zur Folge hat. Schwierigkeiten bereiten auch Fahrzeuge mit Breitreifen, die nicht oder nur knapp in die Schleppspur passen.

Aus der US-PS 3 731 637 und der Literaturstelle DE-Z, FAZ, 16. Juli 1988, Nr. 164, S.31, "Bedroht: Alu-Felgen in der Waschanlage" ist eine Variante hierzu bekannt, in der die Fahrzeugräder statt an ortsfesten Schienen an der offen mitlaufenden Schleppkette seitlich geführt werden. In der Praxis hat sich dies als zu wenig betriebssicher herausgestellt. Zum einen können die Kettenglieder beim Anstreifen den Reifen beschädigen. Andererseits besteht die Gefahr, daß die Schleppketten durch die Reaktionskräfte am Rad aus der Spur geraten und sogar vom Antriebsrad springen.

Die GB 529 157 zeigt schließlich noch eine Schleppvorrichtung mit einem bewegten Gitterrost, zwischen dessen Querstegen das Fahrzeugrad ruht. Aus der DE-OS 20 17 089 ist ferner noch die Anordnung eines Abweisers vor der Schlepprolle bekannt.

Es ist daher Aufgabe der vorliegenden Erfindung, eine Schleppvorrichtung aufzuzeigen, die eine höhere Betriebssicherheit besitzt und die Fahrzeugräder von beliebiger Breite befördern kann, wobei die Gefahr eines Ausbrechens der Fahrzeugräder sicher und beschädigungsfrei gebannt ist.

Die Erfindung löst diese Aufgabe mit den Merkmalen im Kennzeichenteil des Hauptanspruchs.

Bei der erfindungsgemäßen Schleppvorrichtung übernehmen die Gleitsteine die seitliche Führung beim Transport. Am mitbewegten Gleitstein kann das nach wie vor von der Schlepprolle geschobene Fahrzeugrad nicht mehr aufreiten und die Schleppspur verlassen. Im Gegensatz zu der Führung an einer offenen Schleppkette werden durch die Gleitsteine Beschädigungen an seitlich vorstehenden Radteilen, insbesondere an modernen Alu-Felgen vermieden. Auch Fahrzeuge mit überbreiten Reifen, die nicht in die Schleppspur passen, sind für die erfindungsgemäße Schleppvorrichtung kein Problem mehr. Solche Breitreifen können von den Gleitsteinen beschädigungsfrei untergriffen und aufgeladen werden.

Die Gleitsteine können auf oder über dem Zugmittel angeordnet sein. Vorzugsweise sind sie aber als separates Bauteil neben dem Zugmittel angeordnet und eigenständig auf dem Boden abgestützt. Hierbei bietet sich die Lagerung und selbständige Führung auf einer Schiene an. Dies hat besondere Vorteile hinsichtlich des Verschleißes. Die Radkräfte werden an einem leicht zu wechselnden Bauteil abgestützt und nicht am Zugmittel selbst. Ferner kann beim Einfahren in die Waschanlage das Fahrzeugrad zwischen den aufeinanderfolgenden Gleitsteinen behinderungsfrei sowie ohne Kontakt mit bewegten Schleppvorrichtungsteilen auf der Lauffläche positioniert werden. Dies ist vor allem für überbreite Reifen von Vorteil, die zwischen den weiter auseinandergerückten Zugmittelsträngen genügend Platz zum Positionieren vorfinden und erst vom nächsten herannahenden Gleitstein aufgeladen werden. Hierdurch ergibt sich eine hohe Betriebs- und Unfallsicherheit. Wenn die Gleitsteine höher als das benachbarte Zugmittel oder dessen Abdeckung sind, können die Reifen beliebig breit sein und sogar seitlich über das Zugmittel vorstehen.

Eine Anschrägung der Gleitsteine hat den Vorteil, daß ein unerwünschtes Aufreiten des Rades in allen Situationen mit Sicherheit vermieden wird. Sie dient auch dem verbesserten Schutz des Rades und insbesondere der Felgen. Ist die Anschrägung an beiden gegenüberliegenden Gleitsteinen vorhanden, entsteht eine Trichterführung, die auch die sichere Aufnahme und Führung von Breitreifen gestattet, die noch nicht über die Gleitsteine beidseitig vorstehen, aber auch keinen Platz in der Laufbahn mehr finden. Die Anschrägung kann nicht nur bei Gleitsteinen Verwendung finden, die separat vom Zugmittel angeordnet sind, sondern läßt sich mit Erfolg auch für jegliche mit dem Zugmittel mitgeführte Leitelemente einsetzen. Dies können beispielsweise auch auf eine Kette direkt aufgesetzte Tragelemente oder auch ein direkt in Form von Gleitsteinen konzipiertes Zugmittel sein. Dies wäre beispielsweise eine entsprechend gestaltete Kettenlasche.

Für eine optimale Abweiswirkung und Breitreifen-Stützfunktion empfiehlt sich ein Neigungswinkel der Anschrägung von 20 - 30° gegen die Vertikale. Zusätzlich kann das erste Glied der Gleitsteine eine nach innen gerichtete Leitfläche aufweisen.

Die erfindungsgemäße Schleppvorrichtung kann aus einem Zugmittel mit nur einem Strang und daran jeweils in Abständen angeordneten Schlepprollen und Gleitsteinen bestehen. In der bevorzugten Ausführungsform sind jedoch zwei Stränge vorgesehen, an denen die Gleitsteine beidseits der Laufbahn in gleicher Höhe befestigt sind. Die Gleitsteine und die Schlepprolle können getrennt voneinander mit dem Zugmittel verbunden sein. Aus Gründen des Bauaufwands und der Stabilität empfiehlt es sich jedoch, die Teile miteinander zu einem U-förmigen Schleppschuh zu verbinden, wobei die Schlepprolle an den Gleitsteinen gelagert ist. Die Verbindung zum Zugmittel erfolgt vorzugsweise am vorderen Ende über einen drehbar gelagerten Bolzen.

Im weiteren ist alternativ vorgesehen, die Gleitsteine nicht nur vor, sondern auch hinter der Schlepprolle anzuordnen. Dies läßt sich mit allen Arten von Gleitsteinen realisieren. Es entsteht hierbei im Verbund der Gleitsteine und der Schlepprolle ein H-förmiger Schleppschuh. Der hintere Gleitsteinbereich gestattet vor allem eine Führung der Vorderräder, falls durch einen Rollensprung einmal die Hinterräder geschleppt werden sollten und die Vorderräder freilaufen. In diesem Fall kommt auch die Anschrägung der Gleitsteine mit ihrer verbesserten Abweisfunktion besonders vorteilhaft zum Tragen. Um der Führungsfunktion für die Vorderräder der meisten vorhandenen Fahrzeuge gerecht zu werden, besitzt der hintere Gleitsteinbereich einen gewissen Abstand zur nächsthinteren Schlepprolle, der auf den üblichen oder auch den kleinsten Achsabstand abgestimmt ist. Dementsprechend ergeben sich gewisse Längen des hinteren Gleitsteinbereichs. Wird letztere relativ groß gewählt, können Kleinwagen mit kurzem Radabstand auch bei geschleppten Vorderrädern an allen Rädern eine seitliche Führung durch die Gleitsteine erfahren.

Die erfindungsgemäße Schleppvorrichtung kann mit Zugmitteln beliebiger Art, beispielsweise Ketten, Bändern, Seilen oder dergleichen betrieben werden. Die Erfindung erlaubt es darüber hinaus, die Gleitsteine, vorzugsweise in Form der U-förmigen Schleppschuhe, lösbar am Zugmittel zu befestigen. Besonders geeignet ist hierfür ein Seil, das über Mitnehmer mit den Gleitsteinen im Schleppeingriff steht. Das Zugmittel kann damit kontinuierlich umlaufen, während die Gleitsteine nur bei Bedarf eingehängt und mitgenommen werden. Dies verringert einerseits den Verschleiß der bewegten Teile und verbessert andererseits die Unfallsicherheit für Personen, die bei Wartungsarbeiten, beim Verlassen des Fahrzeuges oder dergleichen anderen Gelegenheiten in die Schleppspur treten.

Die Gleitsteine bestehen zur Bildung einer ausreichend großen Leit- oder Stützfläche in der einen Ausführungsform aus mehreren Gliedern, die untereinander gelenkig verbunden sind und damit den Krümmungen des Zugmittels an den Umlenkpunkten folgen können.

Für eine leichte Montage und Demontage der Gleitsteine sowie aus Verschleißgründen können die Gleitsteine alternativ auch aus einer Reihe getrennter Glieder bestehen, die mit dem Zugmittel einzeln verbunden sind. Diese Konstruktion ist einfach und vom Verschleiß her besonders betriebssicher. Die Gliederlänge entspricht im bevorzugten Ausführungsbeispiel dem Teilungsabstand der Kette bzw. der entsprechenden Größe eines beliebig anders gestalteten Zugmittels. Es ist darüber hinaus auch möglich, einzelne Glieder durch Gelenke miteinander zu verbinden und damit eine größere Länge der Einzelglieder zu erzielen. Die Anordnung getrennter Glieder eignet sich alle Bauformen der Gleitsteine.

Für die Montage der Gleitsteine an einer Schleppkette empfiehlt es sich generell, Kettenlaschen mit einer vergrößerten Plattenfläche zur Montage der Gleitsteine bzw. deren Glieder vorzusehen. Hierdurch sind die Verbindungsstellen ohne Demontage der Kette frei zugänglich.

Die Gleitsteine sind in Längsrichtung an einer Schiene geführt und stützen sich vorzugsweise auch auch auf dieser ab. Zusätzlich kann eine seitliche Führung an der Abdeckung des Zugmittels erfolgen. Im Rücklauf sind die Gleitsteine auf einer versenkten Gleitplatte oder einem anderen Leitorgan geführt. Ferner empfiehlt sich auch die Anordnung einer Stufe an der oberen rückwärtigen Längskante zum Eingriff der Zugmittelabdeckung. Hierdurch wird der Gleitstein allseitig geführt und gegen Abheben oder seitliches Ausbrechen gesichert.

Die Gleitsteine besitzen für die beschädigungsfreie Führung und Zentrierung der Fahrzeugräder am vorderen Ende eine Anschrägung sowie eine abgerundete Längskante. Zur Erhöhung der Unfallsicherheit ist ein bodennaher Abweiser vor der Schlepprolle angeordnet und vorzugsweise seitlich an den Gleitsteinen befestigt. Dieser verhindert, daß ein Fuß unter die laufende Schlepprolle gezogen und eingequetscht werden kann.

Die erfindungsgemäße Schleppvorrichtung kann in neuerstellte Anlagen eingebaut, aber auch an bestehenden Waschanlagen nachgerüstet werden.

Die Erfindung ist in den Zeichnungen beispielsweise und schematisch dargestellt. Im einzelnen zeigen:

Fig. 1: eine perspektivische Ansicht einer Schleppvorrichtung,

Fig. 2: eine Stirnansicht gemäß Pfeil II der Schleppvorrichtung von Fig. 1,

Fig. 3 bis 5: perspektivische Detaildarstellungen eines Gleitsteins,

Fig. 6: eine Draufsicht auf eine Schleppvorrichtung mit unterschiedlichen Zuggliedern,

Fig. 7 und 8: Querschnitte durch die Schleppvorrichtung gemäß Schnittlinien VII und VIII VIII von Fig. 6,

Fig. 9: eine perspektivische Ansicht einer Schleppvorrichtung mit einem Seil als Zugmittel,

Fig. 10: eine Schleppvorichtung mit einem Fahrzeug in abgebrochener Seitenansicht,

Fig. 11: einen abgebrochenen und vergrößerten Schnitt gemäß Schnittlinie XI-XI durch die Schleppvorrichtung von Fig 10,

Fig. 12: eine perspektivische Detaildarstellung der Schleppvorrichtung von Fig. 10,

Fig. 13: ein perspektivische Darstellung eines Gliedes des Gleitsteins und

Fig. 14: eine Kettenlasche in Draufsicht.

In den Zeichnungen sind Ausschnitte einer Schleppvorrichtung (1) für eine Autowaschanlage dargestellt, die aus einem endlos umlaufenden Zugmittel (3), mehreren Gleitsteinen (10) und Schlepprollen (7) besteht. Das Zugmittel (3) besitzt jeweils zwei Stränge, die beidseits der Laufbahn (8) für das Fahrzeugrad angeordnet sind. Gemäß den unterschiedlichen Ausführungsbeispielen kann das Zugmittel aus zwei Ketten (4) oder Seilen (5) bestehen, die auf geeignete Weise in Längsrichtung geführt sind.

Innerhalb und längs der Ketten (4) oder Seile (5) sind beidseits der Laufbahn (8) Führungsschienen (9) angeordnet, auf denen die Gleitsteine (10) längsbeweglich gelagert und geführt sind. Die Gleitsteine (10) weisen eine U-förmige Führungsnut (29) auf, mit der die Führungsschienen (9) umgriffen werden. Die Gleitsteine (10) stützen sich auf ihnen und/oder der Laufbahn (8) ab. Die Lagerung kann über Rollen oder Gleitflächen erfolgen. Die Führungsnuten (29) sind an den Enden trichterförmig angefast (nicht dargestellt). Dies erleichtert das Aufgleiten auf die Schienen (9).

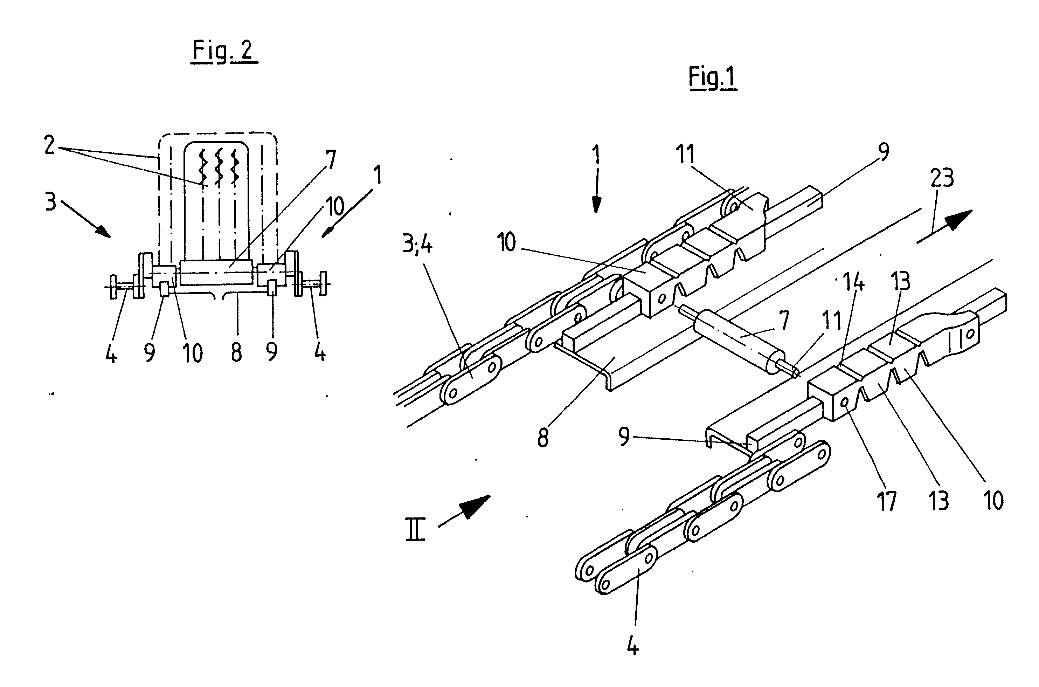

Die Gleitsteine (10) sind in Abständen am Zugmittel (3) befestigt, wobei sich die Gleitsteine eines Paares jeweils in Schlepprichtung (23) auf gleicher Höhe befinden. Die Gleitsteine umgeben und führen das Rad (2) seitlich, wobei sie sich mit diesem bewegen. Das Rad (2) wird hierbei durch die quergerichtete und drehbar gelagerte Schlepprolle (7) geschoben. Die Gleitsteine (10) sind im Ausführungsbeispiel der Fig. 1-9 in Schlepprichtung (23) vor der Schlepprolle (7) angeordnet. Sie bilden mit dieser von oben gesehen einen U-förmigen Schleppschuh (12).

In den gezeigten Ausführungsbeispielen ist die Schlepprolle (7) am hinteren Ende der Gleitsteine (10) drehbar gelagert (17). Die Gleitsteine (10) sind ihrerseits mit dem benachbarten Strang des Zugmittels (3) verbunden. Bei Verwendung einer Kette (4) geschieht dies über quergerichtete Bolzen (11), die drehbar an den Kettengliedern gelagert sind.

In Abwandlung kann auch jedes Teil (7,10) einzeln am Zugmittel (3) gelagert und getrennt in Schlepprichtung (23) geführt sein. Die Gleitsteine (10) können auch über zwei Lagerstellen mit dem Zugmittel (3) verbunden sein, beispielsweise über das Rollenlager (17).

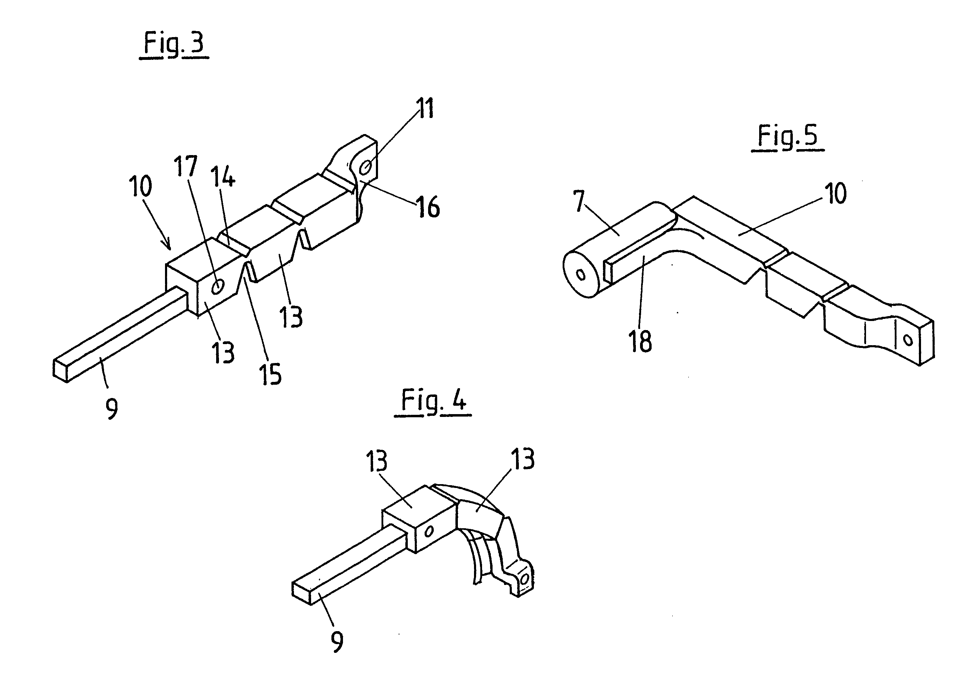

Die Gleitsteine (10) bestehen im Ausführungsbeispiel der Fig. 1-9 jeweils aus mehreren Gliedern (13), die in Schlepprichtung (23) hintereinander angeordnet und durch Gelenke (14) an der Oberseite verbunden sind. Die Gleitsteine (10) weisen dabei seitlich und oben eine glatte Oberfläche auf. An den Verbindungsstellen sind am unteren Seitenrand V-förmige Aussparungen (15) vorgesehen, so daß die Gleitstein (10) der Biegung des umlaufenden Zugmittels (3) an den Umlenkpunkten folgen können (vgl. Fig. 4).

Wie Fig. 2 und 6 bis 8 sowie 11 verdeutlichen, umgeben die Gleitsteine (10) ein normal breites Fahrzeugrad (2) mit mehr oder weniger seitlichem Abstand. Sollte das geschleppte Rad aus der Spur geraten und schräg an einen Gleitstein (10) anlaufen, wird es an diesem wieder geradegerichtet. Da die Gleitsteine (10) mit dem Rad (2) mitbewegt werden, reitet es nicht auf. Um das Rad sicher führen zu können, besitzen die Gleitsteine (10) eine ausreichende Länge, vorzugsweise von mindestens 3/4 des maximal zu erwartenden Raddurchmessers.

Wie Fig. 11-13 verdeutlichen, weist die zur Laufbahn (8) gekehrte Innenseite der Gleitsteine (10) eine Anschrägung (26) auf, die der Vermeidung von Beschädigung des anlaufenden Rades und als besondere Sicherheit gegen Aufreiten dient. Diese fällt von der oberen Längskante des Gleitsteins (10) zur Laufbahn (8) hin ab und geht ein Stück über dem Boden in einen vertikalen Abfall über, der ein Untergreifen des Reifens (30) verhindert (vgl. Fig. 11). Der Neigungswinkel Alpha beträgt vorzugsweise zwischen 20° und 30° gegen die Vertikale. Die Anschrägung (26) kann bei allen Ausführungsformen der Gleitsteine vorgesehen sein.

Die Anschrägung (26) weist das anstreifende Rad ab und läßt es auf die Laufbahn (8) zurückgleiten. Durch die beiden gegeneinander gerichteten Anschrägungen (26) der Gleitsteinpaarung entsteht ferner ein Anlagetrichter, der Breitreifen sicher und zentriert aufnimmt und einen einseitigen Bodenkontakt der Radränder vermeidet. Wie aus Fig. 11 ersichtlich, kommen durch die Anschrägung (26) die Oberkanten der Gleitsteine (10) auch für extreme Niederquerschnittsreifen in genügenden Abstand zum Felgenbett (31).

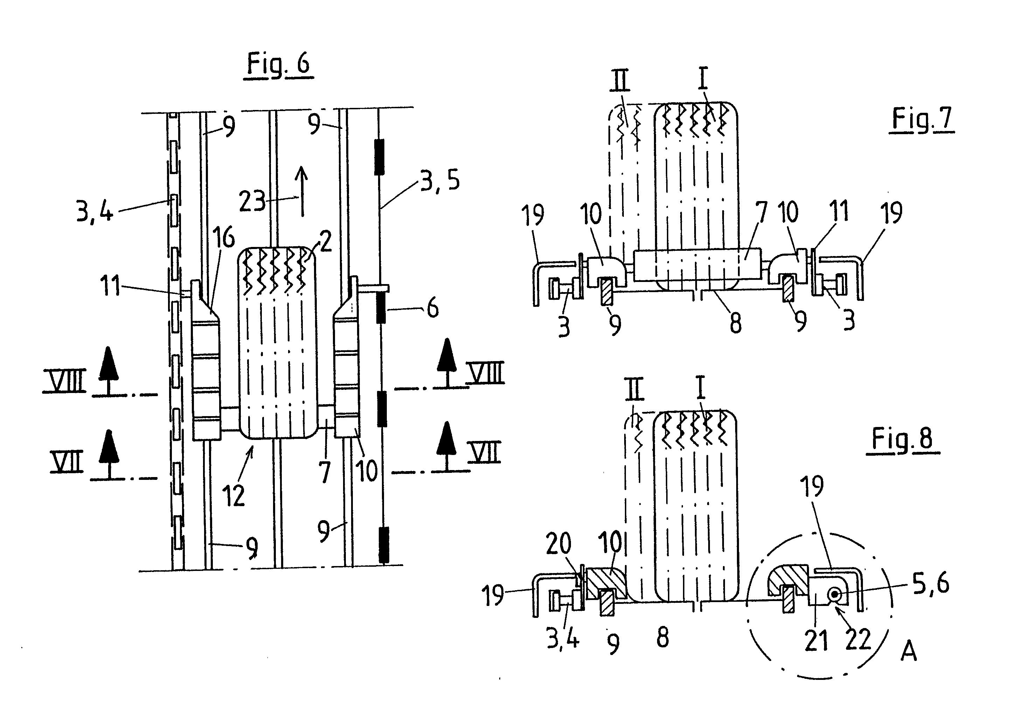

Anstelle oder zusätzlich zur Anschrägung (26) kann die obere innenliegende Längskante der Gleitsteine (10) abgerundet sein (vgl. Fig. 7 und 8).

Am in Schlepprichtung (23) vorderen Ende können die Gleitsteine (10) ferner eine nach innen zur Laufbahn (8) geneigte Anschrägung (16) aufweisen. Diese dient als Leitfläche, um das Rad (2) beim Anlaufen nach innen in die Schleppspur zu zwingen. Die Anschrägung kann gegebenenfalls zusätzlich eine nach vorn abfallende Komponente besitzen, um ein Untergreifen und Aufladen von Breitreifen zu erleichtern.

Am hinteren Ende ist in Bodennähe vor der Schlepprolle (7) ein quergerichteter, stabförmiger Abweiser (18) angeordnet, der beidseits an den Gleitsteinen (10) oder an der Schlepprolle (7) befestigt ist.

Wenn ein Fahrzeugrad (2) eine größere Breite als die freie Laufbahn zwischen den Gleitsteinen (10) aufweist oder mit einem starken seitlichen Versatz an der Eingangsseite der Autowaschanlage positioniert wird, wird es von einem oder beiden herannahenden Gleitsteinen (10) untergriffen, angehoben und aufgeladen. Fig. 2 zeigt diese Stellung, in der das Rad (2) auf beiden Gleitsteinen (10) ruht und von diesen abgeschützt und mitgeschleppt wird. Um ein Herabrollen nach hinten zu verhindern, steht die Schlepprolle (7) nach oben über die Gleitsteine (10) vor.

Im Ausführungsbeispiel in Fig. 2 besitzen die Gleitsteine (10) eine seitliche längsverlaufende Schulter, die die Aufstandsfläche des Rades (2) beschränkt. Das Zugmittel (3), hier zwei Ketten (4), verläuft ohne oder mit Abdeckung und kann in diesem Fall gleich hoch oder höher als die Radaufstandsfläche der Gleitsteine (10) sein.

Im Ausführungsbeispiel der Fig. 7 und 8 hingegen ragen die Gleitsteine (10) nach oben über das Zugmittel (3) hinaus. In diesem Fall kann ein Breitreifen auch seitlich über das Zugmittel (3) vorstehen, ohne dieses zu belasten. Das Zugmittel (3) kann außerdem mit einer Abdeckung (19) versehen sein, die das Zugmittel (3) seitlich und oben umgreift. Die Abdeckung (19) besitzt an der innenliegenden Längskante eine hakenförmige Abkantung (20), an der die Gleitsteine (10) zusätzlich seitlich geführt sind.

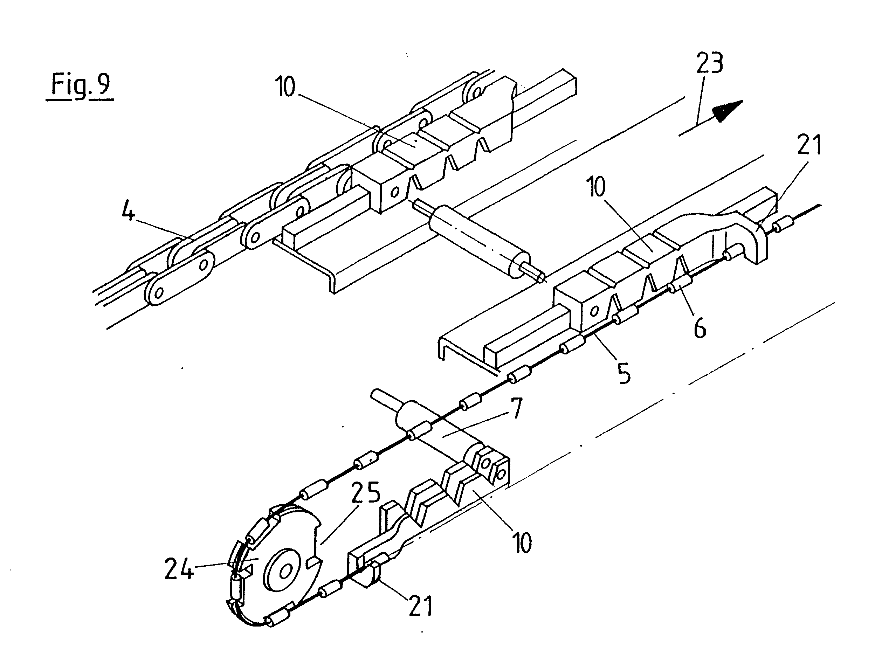

Das Ausführungsbeispiel der Fig. 6 und 9 zeigt ein Zugmittel (3) in Form eines Stahlseile (5) mit in Abständen angeordneten Mitnehmern (6). Üblicherweise bestehen beide Stränge aus einem Stahlseil. Die Mitnehmer (6) bestehen hier aus aufgepreßten Metallwalzen. Sie können auch anders ausgebildet sein, beispielsweise als Kugeln. Die Gleitsteine (10) sind an den Mitnehmern (6) lösbar befestigt und können bei Bedarf ein- und ausgehängt werden.

Sie besitzen hierzu einen am vorderen Ende seitlich vorstehenden Fanghaken (21), der mit dem schleppenden Mitnehmer (6) formschlüssig in Eingriff steht. Der Fanghaken (21) hat einen nach unten offenen Schlitz (22), der das Seil (5) übergreift, wobei der breitere Mitnehmer (6) an den Schlitzwänden formschlüssig geführt ist. Um eine Zentrierung und zusätzliche Seitenführung zu erreichen, sind der Mitnehmer (6) und die Schlitzwände stirnseitig mit zueinander passenden kegel- oder kugelartigen Ausformungen versehen.

Fig. 9 verdeutlicht die Schlepplage eines unterirdisch zurückkehrenden Gleitsteins (10). Dieser ist an seiner Radaufstandsfläche auf einer Gleitplatte (nicht dargestellt) geführt. Wenn diese Gleitplatte ein Stück niedriger liegt als das untere Seiltrum, können beide Teile (3,10) getrennt voneinander bewegt werden. Am Ende der Schleppbahn ergreift hierzu eine Abweisergabel den Gleitstein (10) bzw. den Schleppschuh (12) am Umlenkpunkt, löst ihm vom Zugmittel (3) und läßt ihn auf die tieferliegende Gleitfläche rutschen. Über geeignete Antriebsmittel werden die Gleitsteine (10) weiterbefördert und am anderen Ende über eine Klappe angehoben und in das umlaufende Zugmittel (3) wieder eingehängt. Fig. 9 zeigt diese Stellung.

Das Seil (5) wird samt dem gelenkigen Gleitstein (10) über eine schmale Umlenkrolle (4) bewegt. Diese besitzt zum formschlüssigen Eingriff mit den Mitnehmern (6) umfangsseitige Schleppnuten (25). Diese sind am vorderen Ende zusätzlich mit einer radialen Vertiefung versehen. Der Abstand der Gelenke (14) der Gleitsteine (10) ist auf den Durchmesser der Umlenkrolle (24) abgestimmt bzw. auf die Teilung einer Kette (4).

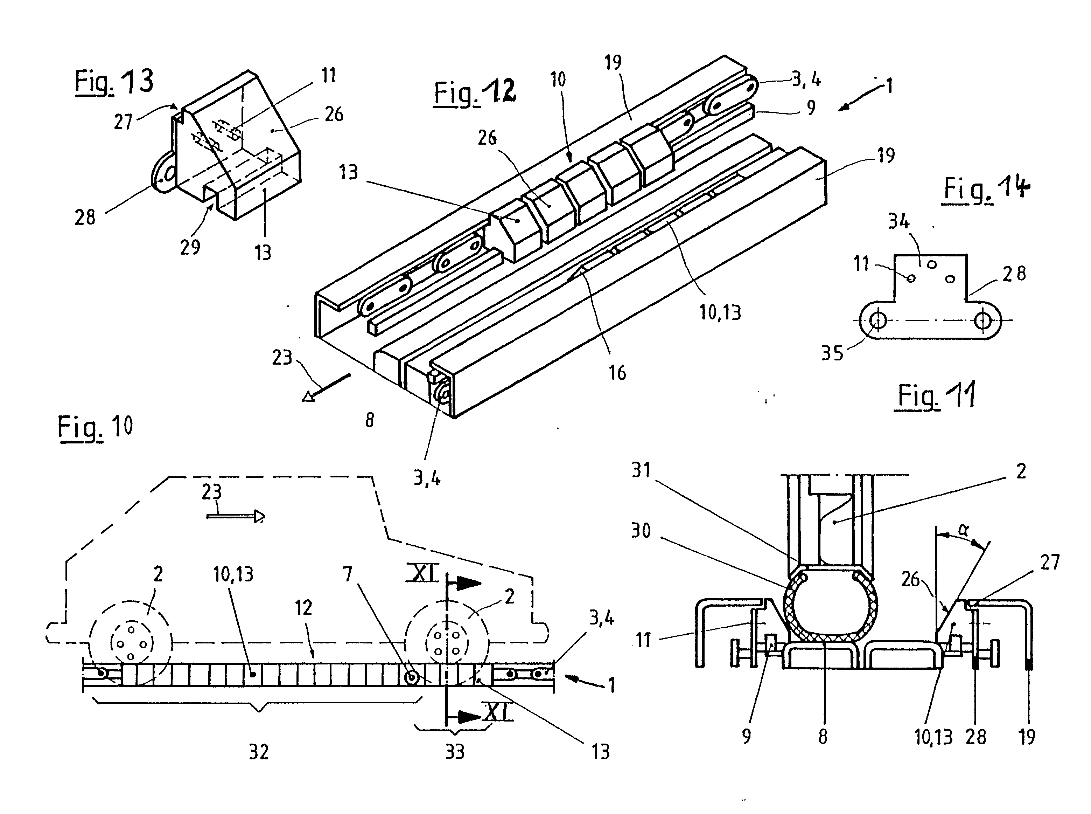

Im Ausführungsbeispiel der Fig. 10-14 sind die Gleitsteine (10) in Schlepprichtung (23) vor und hinter der Schlepprolle (7) angeordnet (vgl. Fig 10). Sie bilden zusammen einen H-förmigen Schleppschuh (12). Um das Rad sicher führen zu können, besitzen die Gleitsteine (10) auch in dieser Ausführungsform im vor der Schlepprolle gelegenen Bereich (33) eine ausreichende Länge, vorzugsweise von mindestens 3/4 des maximal zu erwartenden Raddurchmessers.

Der hintere Gleitsteinbereich (32) dient zur Führung der Vorderräder, falls es einmal zu einem Rollensprung kommen sollte und das Fahrzeug am Hinterrad von der nächstfolgenden Schlepprolle (7) geschoben wird. In diesem Fall werden Vorder- und Hinterräder geführt und zwar von den vorderen und hinteren Gleitsteinbereichen (32,33) verschiedener Schlepprollen (7).

Zu diesem Zweck ist die Länge des hinteren Gleitsteinbereiches (32) bzw. dessen Abstand zur nächstfolgenden Schlepprolle (7) auf die zu erwartenden Radstände der Fahrzeuge abgestimmt. Der zur Zeit kleinste bekannte PKW-Radstand beträgt ca. 1,80 m. Für diesen Fall wird ein Abstand des Gleitsteinendes zur nächsthinteren Schlepprolle (7) von ca. 1,70 m gewählt. Bei einem Schlepprollenabstand von ca. 3,20 m ergibt sich hieraus eine Länge des hinteren Gleitsteinbereiches (32) von 1,50 m.

Bei der Mehrzahl der Fahrzeuge liegen die Radabstände jedoch über 2 m. In der Praxis hat sich damit auch ein Abstand von 2,30 m bzw. eine Länge des hinteren Gleitsteinbereiches (32) von 0,90 m als ausreichend erwiesen.

In Variation zum gezeigten Ausführungsbeispiel mit mehreren mit Abstand hintereinander angeordneten Gleitsteinen kann auch ein über die gesamte Länge des einzelnen Zugmittels (3) durchgehender und insoweit endloser Gleitstein eingesetzt werden.

An der rückwärtigen Oberkante haben die Gleitsteine (10) eine längslaufende Stufe (27). In diese greifen die L-förmigen Abdeckungen (19) des Zugmittels (3) mit Spiel ein und verhindern ein Abheben der Gleitsteine (10) (vgl. Fig. 11). Außerdem sind die Gleitsteine (10) hierdurch zusätzlich gegen vom Rad (2) ausgeübte Querkräfte abgestützt und können nicht kippen.

Trotz der Anschrägung (26) kann noch eine verkleinerte Deckfläche der Gleitsteine als Radauflage vorhanden sein. Diese ragt vorzugsweise nach oben über die Zugmittelabdeckung (19), um einen aufgeladenen Breitreifen beim Transport darüber hinwegzuheben. Das Rad kann je nach Reifenbreite beim Einfahren in die Waschanlage im Raum zwischen den Zugmittelabdeckungen (19) oder bei Überbreite auch auf den Zugmittelabdeckungen (19) positioniert werden. Um ein Herabrollen von den Gleitsteinen (10) nach hinten zu verhindern, steht die Schlepprolle (7) nach oben über die Gleitsteine (10) vor.

Die Gleitsteine (10) bestehen im gezeigten Ausführungsbeispiel jeweils aus einer Reihe von mehreren selbständigen Gliedern (13), die in Schlepprichtung (23) hintereinander angeordnet sind. Sie weisen zwischen sich einen geringfügigen Abstand auf, um der Biegung des umlaufenden Zugmittels (3) an den Umlenkpunkten folgen zu können. Alternativ können die Glieder (13) auch aneinanderstoßen und am unteren Seitenrand V-förmige Aussparungen besitzen.

Die Glieder sind einzeln am Zugmittel (3) befestigt. Bei einer Kette (4) sind sie an den Kettenlaschen (28) montiert. Wie Fig. 13 und 14 zeigen, sind hierfür diese Kettenlaschen (28) mit einer vergrößerten Montageplatte (34) versehen, die sich zwischen den Kettenaugen (35) nach oben erstreckt. Die Montageplatte (34) liegt plan an der Rückwand der Glieder (13) an und ist mit dieser an mehreren Stellen durch Schrauben oder Bolzen (11) oberhalb der normalen Laschenhöhe verbunden. Die Verbindungsstellen sind dadurch ohne Demontage der Kette (4) zugänglich und erlauben einen schnellen Austausch der Glieder (13).

Die Schlepprollen (7) sind alternativ an den Gleitsteinen (10) drehbar gelagert oder direkt mit dem Zugmittel (3) verbunden. Sie können ihrerseits eine Längsführung haben, beispielsweise in Form seitlicher, radial vorstehender Bundrollen, die in eine Bodenrinne greifen.

Variationen der dargestellten Ausführungsform sind in verschiedener Hinsicht analog dem ersten Ausführungsbeispiel möglich. Dies betrifft aushängbare Gleitsteine bzw. deren Einzelglieder, andere Gestaltungen des Zugmittels, freilaufende Zugmittel etc. Die Schleppvorrichtung (1) kann in einer Autowaschanlage einfach oder doppelt mit entsprechender Zugmittelsynchronisierung vorhanden sein.

## STÜCKLISTE

1 Schleppvorrichtung
2 Fahrzeugrad
3 Zugmittel
4 Kette
5 Seil
6 Mitnehmer
7 Schlepprolle
8 Laufbahn, Lauffläche
9 Führungsschiene
10 Gleitstein
11 Bolzen, Lager
12 Schleppschuh
13 Glied
14 Gelenk
15 Aussparung
16 Leitfläche, Anschrägung
17 Lager, Bohrung
18 Abweiser
19 Abdeckung
20 Abkantung, Stützfläche
21 Fanghaken
22 Öffnung, Schlitz
23 Schlepprichtung
24 Umlenkrolle
25 Schleppnut
26 Anschrägung
27 Stufe
28 Kettenlasche
29 Führungsnut
30 Reifen
31 Felgenbett
32 Hinterer Gleitsteinbereich
33 Vorderer Gleitsteinbereich
34 Montageplatte
35 Kettenauge

## Ansprüche

1.) Schleppvorrichtung für Fahrzeugräder in Autowaschanlagen mit einer Laufbahn für die Räder, einem Zugmittel und mehreren. in Abständen damit verbundenen, quergerichteten Schlepprollen, dadurch **gekennzeichnet**, daß mit dem Zugmittel (3) mehrere Gleitsteine (10) in Abständen verbunden sind und mitbewegt werden, die das Fahrzeugrad (2) seitlich führen. wobei die Gleitsteine (10) seitlich neben der Laufbahn (8) und in Schlepprichtung (23) jeweils vor der benachbarten Schlepprolle (7) angeordnet sind.

2.) Schleppvorrichtung nach Anspruch 1, dadurch **gekennzeichnet**, daß die Gleitsteine (10) zwischen dem Zugmittel (3) und der Laufbahn (8) angeordnet sind und sich ohne Belastung des Zugmittels (3) eigenständig auf dem Boden abstützen.

3.) Schleppvorrichtung nach Anspruch 1 oder 2, dadurch **gekennzeichnet**, daß die Gleitsteine (10) auf einer Führungsschiene (9) längsbeweglich gelagert und geführt sind.

4.) Schleppvorrichtung nach Anspruch 1, dadurch **gekennzeichnet**, daß mit dem Zugmittel (3) mehrere Gleitsteine (10) verbunden sind und mitbewegt werden, die separat geführt oder auf dem Zugmittel (3) als Abdeckungen angeordnet sind, und daß die Gleitsteine (10) an der innenliegenden Längsseite eine zur Laufbahn (8) geneigte Anschrägung (26) aufweisen.

5.) Schleppvorrichtung nach Anspruch 4, dadurch g e k e n n z e i c h n e t, daß die Anschrägung (26) einen Winkel von 20-30° gegen die Vertikale aufweist.

6.) Schleppvorrichtung nach einem oder mehreren der Ansprüche 1 bis 5, dadurch **gekennzeichnet**, daß die Gleitsteine (10) sich vor und hinter die zugeordnete Schlepprolle (7) erstrecken.

7.) Schleppvorrichtung nach Anspruch 6, dadurch **gekennzeichnet**, daß der Abstand vom Ende des hinteren Gleitsteinbereichs (32) zur nächsten Schlepprolle (7) kleiner als der Achsabstand von Kleinwagen ist.

8.) Schleppvorrichtung nach Anspruch 7, dadurch **gekennzeichnet**, daß die Länge des hinteren Gleitsteinbereichs (32) 0,9 - 1,5 m beträgt.

9.) Schleppvorrichtung nach einem oder mehreren der Ansprüche 1 bis 8, dadurch **gekennzeichnet**, daß das Zugmittel (3) zwei parallel laufende Stränge mit beidseits der Laufbahn (8) auf gleicher Höhe angeordneten Gleitsteinen (10) aufweist.

10.) Schleppvorrichtung nach Anspruch 9, dadurch **gekennzeichnet**, daß die Gleitsteine (10) und die zugeordnete Schlepprolle (7) miteinander unter Bildung eines U- oder H-förmigen Schleppschuhs (12) verbunden sind.

11.) Schleppvorrichtung nach Anspruch 1 oder einem der folgenden, dadurch **gekennzeichnet**, daß das Zugmittel (3) als Seil (5) ausgebildet ist und Mitnehmer (6) für die Gleitsteine (10) aufweist.

12.) Schleppvorrichtung nach Anspruch 1 oder einem der folgenden, dadurch **gekennzeichnet**, daß die Gleitsteine (10) lösbar am Zugmittel (3) befestigt sind.

13.) Schleppvorrichtung nach Anspruch 11 oder 12, dadurch **gekennzeichnet**, daß die Gleitsteine einen seitlich vorstehenden Fanghaken (21) aufweisen, der das Seil (5) übergreift und mit dem Mitnehmer (6) im Eingriff steht.

14.) Schleppvorrichtung nach Anspruch 1 oder einem der folgenden, dadurch **gekennzeichnet**, daß die Gleitsteine (10) mehrere in Schlepprichtung (23) hintereinander angeordnete und gelenkig (14) untereinander verbundene Glieder (13) aufweisen.

15.) Schleppvorrichtung einem oder mehreren der Ansprüche 1 bis 13, dadurch **gekennzeichnet**, daß die Gleitsteine (10) aus einer Reihe von getrennten Gliedern (13) bestehen, die jeder für sich mit dem Zugmittel (3) verbunden sind.

16.) Schleppvorrichtung nach Anspruch 15, dadurch **gekennzeichnet**, daß die Glieder (13) mit Abstand zueinander angeordnet und mit den Kettenlaschen (28) der Schleppkette (4) verbunden sind.

17.) Schleppvorrichtung nach Anspruch 16, dadurch **gekennzeichnet**, daß die zur Verbindung vorgesehenen Kettenlaschen (28) eine vergrößerte Plattenfläche zwischen den Kettenaugen aufweisen.

18.) Schleppvorrichtung nach Anspruch 15, 16 oder 17, dadurch **gekennzeichnet**, daß die Führungsnuten (29) der Glieder (13) stirnseitige Anfasungen aufweisen.

19.) Schleppvorrichtung nach Anspruch 1 oder einem der folgenden, dadurch **gekennzeichnet**, daß die Gleitsteine (10) nach oben über das Zugmittel (3) oder dessen Abdeckung (19) vorragen.

20.) Schleppvorrichtung nach Anspruch 1 oder 19, dadurch **gekennzeichnet**, daß die Gleitsteine (10) außenseitig an der Abdeckung (19) geführt sind.

21.) Schleppvorrichtung nach Anspruch 19 oder 20, dadurch **gekennzeichnet**, daß die Gleitsteine (10) an der oberen rückwärtigen Längskante eine Stufe (27) aufweisen, in die der Rand der Zugmittelabdeckung (19) ragt.

22.) Schleppvorrichtung nach Anspruch 1 oder einem der folgenden, dadurch **gekennzeichnet**, daß das in Schlepprichtung (23) vordere Glied (13) der Gleitsteine (10) eine stirnseitige schräge Leitfläche (16) aufweist.

23.) Schleppvorrichtung nach Anspruch 1 oder einem der folgenden, dadurch **gekennzeichnet**, daß die Gleitsteine (10) an der innenliegenden oberen Längskante abgerundet sind.

24.) Schleppvorrichtung nach Anspruch 1 oder einem der folgenden, dadurch **gekennzeichnet**, daß in Bodennähe vor und längs der Schlepprolle (7) ein Abweiser (18) angeordnet ist.

EP 0 359 162 A2

Fig. 2

Fig. 1

Fig. 3

Fig. 5

Fig. 4

EP 0 359 162 A2

Fig.7

Fig.8

Fig.6

Fig.9

Fig. 13

Fig. 12

Fig. 14

Fig. 11

Fig. 10

EP 0 359 162 A2